# EUROPÄISCHE PATENTANMELDUNG

(11) **EP 1 239 424 A2**
(43) Veröffentlichungstag der Anmeldung: **11.09.2002**
(21) Anmeldenummer: 01102500.4
(22) Anmeldetag: 05.02.2001
(51) Int. Cl.: G07F 7/10

(54) **Verfahren zum Abrufen persönlicher Dokumente an öffentlich zugänglichen Terminals**

(71) Anmelder: Wincor Nixdorf GmbH & Co KG, 33106 Paderborn (DE)
(72) Erfinder: Fuhrmann, Gert, 33102 Paderborn (DE)

(57) **Zusammenfassung**

Die Erfindung betrifft eine Selbstbedienungs-Datenstation (10) und ein Verfahren zum Abrufen von für eine Person bestimmter Information an einer solchen. Die Selbstbedienungs-Datenstation (10) ist zwischen einem ersten Betriebszustand, in dem sie mit einer übergeordneten Datenverarbeitungsanlage verbunden ist, und einem zweiten Betriebszustand umschaltbar, in dem sie Anrufe aus dem Netzwerk entgegenzunehmen und darin enthaltene Informationen auszudrukken und/oder in dem Datenspeicher (14) zu speichern vermag.

## Beschreibung

Die Erfindung betrifft eine Selbstbedienungs-Datenstation und ein Verfahren zum Abrufen von für eine Person bestimmter Information an einer solchen Selbstbedienungs-Datenstation.

Eine Vielzahl persönlicher Dokumente und Nachrichten werden heute über geeignete Netze elektronisch übermittelt und mittels geeigneter Endgeräte beim Empfänger in eine nutzbare Form zurückgewandelt und/oder auf einem geeigneten Datenträger gespeichert. Beispiele solcher Dokumente und Nachrichten sind

Schriftstücke (z.B. Fax, E-mail), die an einem Bildschirm angezeigt oder mittels eines Drucks ausgedruckt werden,

Audielle Dokumente und Nachrichten (Sprache, Ton, Musik), die über einen elektroakustischen Wandler wiedergegeben werden oder Sprachnachrichten, die mit Hilfe eines Spracherkennungsprogramms digitalisiert und dann ausgedruckt werden,

Visuelle Dokumente und Nachrichten (Bilder, Filme), die über einen Bildschirm wiedergegeben, mittels eines Druckers ausgedruckt oder auf einem geeigneten Datenträger gespeichert werden,

Steuerdaten (z.B. Binärdateien), die in ein Zielgerät des Empfängers geleitet werden und dort zu unterschiedlichsten Zwecken genutzt werden.....

Während die klassische Nachrichtenübermittlung (z.B. Fax, Telefon) die gleichzeitige Netzzuschaltung von Sender und Empfänger fordert, zeichnen sich die modernen Methoden der Nachrichtenübermittlung (E-mail, Internet) dadurch aus, daß die Nachricht in einem am Übertragungsnetz angeschlossenen Speicher abgelegt und vom Empfänger zu einem späteren Zeitpunkt abgerufen und seinen Endgeräten zugeführt wird. Solche Dienste mit elektronischen Briefkästen stehen heute für alle Formen elektronischer Dokumente und Nachrichten zur Verfügung.

Eine Ausführungsform solcher Nachrichtenspeicher sind die Mailboxen im Internet. Eine zweite Ausführungsform ist die T-Net-Box der Deutschen Telekom AG, die Sprachnachrichten und Faxdokumente in einem persönlichen Informationsspeicher im Telefonnetz zwischenspeichert.

Gemeinsames Merkmal dieser Nachrichtenübermittlungstechnik ist, daß sich der Empfänger über geeignete Berechtigungsverfahren in das Netz einschaltet und dann die Übertragung seiner persönlichen Dokumente und Nachrichten an seine dafür geeigneten Endgeräte abruft.

Die weltweite Verknüpfung dieser Netze (z.B. Telefonnetz, Internet) bietet dem Empfänger prinzipiell die Möglichkeit, sich weltweit an einer beliebigen Stelle in das Netz einzuschalten und von dort Zugang zum persönlichen Informationsspeicher zu erhalten, also seine persönlichen Dokumente und Nachrichten von nahezu jedem beliebigen Ort aus abzurufen.

Der prinzipiell mögliche ortsungebundene Zugang zu persönlichen Dokumenten und Nachrichten in Netzen scheitert häufig daran, daß der Empfänger an anderen Orten als seinem Stammanschluß Geräte zum Netzzugang und/oder Geräte zur Wandlung der Nachrichten in eine nutzbare Form, insbesondere zum Ausdruck von Dokumenten, nicht verfügbar hat.

Eine Selbstbedienungs-Datenstation mit einem Drucker wird von der Fa. Wincor Nixdorf GmbH & Ko. KG unter der Produktbezeichnung "ProPrint 200, Kunden-Informations-Drucker" angeboten. Der bekannte Drucker wird beispielsweise in Geldinstituten als selbstbedienter Kontoauszugdrucker eingesetzt. Er weist ein Sichtgerät und ein Eingabemedium für manuelle Eingaben auf. Ein integrierter Kartenleser erlaubt eine Prüfung der Zugangsberechtigung.

Moderne Kontoauszugsdrucker bzw. Kunden-Informations-Terminals verfügen darüber hinaus über Nahfeld-Kommunikationsschnittstellen (z.B. Infrarot, Bluetooth), über die der Empfänger seine persönlichen Dokumente und Nachrichten direkt in ein geeignetes mitgebrachtes Gerät (z.B. ein Laptop, oder ein sog. Personal Digital Assistent PDA) einspeisen kann.

Aufgabe der Erfindung ist es, eine Selbstbedienungs-Datenstation und ein Verfahren vorzuschlagen, die es ermöglichen persönliche Dokumente und Nachrichten über eine Datenverbindung abzurufen und an einem beliebigen Ort verfügbar zu machen.

Der anordnungsbezogene Teil der Aufgabe wird durch die Merkmale des Anspruch 1 und der verfahrensbezogene Teil durch die Merkmale des unabhängigen Verfahrensanspruchs gelöst.

Die Erfindung geht von der Feststellung aus, daß Selbstbedienungs-Datenstationen heute weit verbreitet, für vielfältige Anwendungszwecke eingerichtet und öffentlich zugänglich sind. Sie sind 24 Stunden pro Tag betriebsbereit und ihre Bedienung ist den meisten Menschen vertraut. Kontoauszugsdrucker der Banken beispielsweise sind als solche Selbstbedienungs-Datenstationen dafür konzipiert, persönliche, vertrauliche Daten auszudrucken. Sie sind besonders weit verbreitet.

Eine solche Selbstbedienungs-Datenstation ist erfindungsgemäß dahingehend ausgebildet, daß sie zwischen einem ersten Betriebszustand, in dem sie mit einer übergeordneten Datenverarbeitungsanlage verbunden ist, und einem zweiten Betriebszustand umschaltbar ist, in dem sie Anrufe aus dem Netzwerk entgegenzunehmen und darin enthaltene Informationen auszudrucken und/oder in dem Datenspeicher zu speichern vermag.

In dem ersten Betriebszustand ist die Selbstbedienungs-Datenstation für ihren primären Anwendungszweck betriebsbereit. Dies ist, um nur einige Anwendungbereiche zu nennen, bei einem Kreditinstitut beispielsweise die Bereitstellung von Kontoauszügen, Börsennachrichten, Immobilienangeboten und ähnlichen typischerweise von einem Kreditinstitut angebotenen Informationen. Ein Verkehrsunternehmen wird beispielsweise primär Fahrplanauskünfte bereitstellen und eine Touristik-Einrichtung Auskünfte über Reiseverantaltungen oder Stadtrundgänge.

In dem zweiten Betriebszustand wird die Selbstbedienungs-Datenstation in die Lage versetzt, aus einem Netz, allgemein ein drahtloses oder leitungsgebundenes analoges oder digitales (ISDN) Kommunikationsnetz, Anrufe und in diesen enthaltene Informationen entgegenzunehmen oder auch selbständig Verbindungen aufzubauen. Damit wird es einem Benutzer möglich, an der Selbstbedienungs-Datenstation -also fern seines Heimatanschlusses- aus einem an das Netz angeschlossenen persönliche Informationsspeicher für ihn bestimmte persönliche Nachrichten abzurufen und auszudrucken.

Entsprechend einer Weiterbildung der Erfindung ist die Selbstbedienungs-Datenstation mit einer an deren Steuerrechner angeschlossenen Kartenlese- und Codiereinrichtung für Chipkarten und/oder Magnetstreifenkarten ausgestattet, und die Selbstbedienungs-Datenstation nur in dem zweiten Betriebszustand betreibbar, wenn zuvor eine Chip- oder Magnetstreifenkarte gelesen wurde. Damit ist es möglich, das Abrufen von für eine Person bestimmter persönlicher Information aus einem an ein Netzwerk angeschlossenen persönlichen Informationsspeicher nur einem bestimmten Personenkreis, beispielsweise den Kunden eines Kreditinstituts zu gestatten. Einem solchen überschaubaren Personenkreis kann dann der Abruf persönlicher Information aus dem persönlichen Informationsspeicher kostenlos als besondere Kundendienstleistung angeboten werden.

Es ist aber auch möglich, die Kartenlese- und Codiereinrichtung zur Bearbeitung von Chipkarten und/oder Magnetstreifenkarten zu benutzen, wobei von einem in der Chipkarte oder Magnetstreifenkarte gespeicherten Guthabensbetrag die Kosten des Abrufs abgebucht werden, oder wobei die Chipkarte oder Magnetstreifenkarte eine Scheck- oder Kreditkarte ist, mit deren Hilfe die Kosten des Abrufs einem Konto belastet werden.

Ein erstes im zweiten Betriebszustand ablauffähiges Verfahren zum Abrufen von für eine Person bestimmter Information aus einem an ein Netzwerk angeschlossenen persönlichen Informationsspeicher weist erfindungsgemäß folgende Schritte auf:
1.Eingabe der Adresse eines persönlichen Informationsspeichers über das Eingabemedium und Verbindungsaufbau zwischen der Selbstbedienungs-Datenstation und dem Informationsspeicher,
2.Eingabe von Authentisierungsmerkmalen über das Eingabemedium,
3.Senden der Netzwerk-Adresse der Selbstbedienungs-Datenstation an den persönlichen Informationsspeicher,
4.Beenden der Verbindung zu dem persönlichen Informationsspeicher,
5.Verbindungsaufbau vom persönlichen Informationsspeicher zur Selbstbedienungs-Datenstation unter Steuerung durch den persönlichen Informationsspeicher,
6.Abruf von im persönlichen Informationsspeicher gespeicherter Information,
7.Ausgabe der abgerufenen Information,
8.Beenden der Verbindung zwischen dem persönlichen Informationsspeicher und der Selbstbedienungs-Datenstation.

Die Schritte 1-4 dienen der Anmeldung einer Person bei ihrem persönlichen Informationsspeicher. Diese wird entsprechend Schritt 1 durch einen Anruf bei dem persönlichen Informationsspeicher eingeleitet. Letzterer meldet sich durch meist maschinell erzeugte natürlichsprachliche Bedienungsaufforderungen, die bei unterschiedlichen E-Boxen verschieden sein können, aber immer eine Aufforderung zur Eingabe eines Authentisierungsmerkmals enthalten. Dieses wird in Schritt 2 -z.B. in Gestalt einer PIN-Nummer- eingegeben und zum persönlichen Informationsspeicher übertragen. Gemäß Schritt 3 sendet die Selbstbedienungs-Datenstation selbständig ihre eigene Netzwerk-Adresse, im einfachsten Fall ihre Telefonnummer, an die Selbstbedienungs-Datenstation und beendet gemäß Schritt 4 die Verbindung dorthin.

In Schritt 5 erfolgt die Rückmeldung des persönlichen Informationsspeichers bei der Selbstbedienungs-Datenstation. Dies geschieht in der Praxis nach einigen Sekunden durch einen Anruf über das Netz. Es wird danach eine Mitteilung über im persönlichen Informationsspeicher vorhandene Informationen zur Selbstbedienungs-Datenstation übertragen, die gemäß Schritt 6 nacheinander abgerufen werden können. Gemäß Schritt 7 erfolgt die Ausgabe der abgerufenen Information. In Schritt 6 wird die Verbindung zwischen der Selbstbedienungs-Datenstation und dem persönlichen Informationsspeicher beendet. Dies kann durch eine Eingabe an der Selbstbedienungs-Datenstation erfolgen, beispielsweise wenn der Benutzer keine weiteren Informationen wünscht, oder durch den persönlichen Informationsspeicher, wenn alle Informationen abgerufen worden sind.

Bei einem alternativen im zweiten Betriebszustand ablauffähigen Verfahren zum Abrufen von für eine Person bestimmter Information aus einem an ein Netzwerk angeschlossenen persönlichen Informationsspeicher kommt ein diskretes, von der Selbstbedienungs-Datenstation unabhängiges Fernsprechendgerät, beispielsweise ein drahtgebundener Telefonapparat oder ein Mobiltelefon, ein sog. Handy, zum Einsatz. das Verfahren weist erfindungsgemäß folgende Schritte auf:
1.Eingabe der Adresse eines persönlichen Informationsspeichers über die Eingabeeinrichtung des Fernsprechendgerätes und Verbindungsaufbau zwischen diesem und dem persönlichen Informationsspeicher,
2.Eingabe von Authentisierungsmerkmalen über die Eingabeeinrichtung des Fernsprechendgerätes,
3.Eingabe der Netzwerk-Adresse der Datenstation über die Eingabeeinrichtung des Fernsprechendgerätes,
4.Beenden der Verbindung zwischen dem Fernsprechendgerät und dem persönlichen Informationsspeicher,
5.Verbindungsaufbau vom persönlichen Informationsspeicher zur Selbstbedienungs-Datenstation unter Steuerung durch den persönlichen Informationsspeicher,
6.Abruf von im persönlichen Informationsspeicher gespeicherter Information,
7.Ausgabe der abgerufenen Information,
8.Beenden der Verbindung zwischen dem persönlichen Informationsspeicher und der Selbstbedienungs-Datenstation.

Das zweite Verfahren unterscheidet sich von dem ersten hauptsächlich in den Schritten 1-4, da hier die Eingaben über die Eingabeeinrichtung -meist eine Tastatur- des Fernsprechendgerätes erfolgen. Gemäß Schritt 3 muß auch die Eingabe der Netzwerk-Adresse der Datenstation über die Eingabeeinrichtung des Fernsprechendgerätes erfolgen, da das Fernsprechendgerät diese nicht "kennen" kann. Die Netzwerk-Adresse muß in diesem Fall an der Selbstbedienungs-Datenstation angebracht sein oder von dieser angezeigt werden.

Weitere Merkmale und Vorteile der Erfindung ergeben sich aus der folgenden Beschreibung, welche in Verbindung mit den beigefügten Zeichnungen die Erfindung an Hand eines Ausführungsbeispiels erläutert.

Es zeigt
- Fig. 1: den Aufbau einer Selbstbedienungs-Datenstation in einem Blockschaltbild,
- Fig. 2: den Verbindungsaufbau von der SelbstbedienungsDatenstation zum persönlichen Informationsspeicher in einem ersten Ablaufdiagramm,
- Fig. 3: den Verbindungsaufbau vom persönlichen Informationsspeicher zu der Selbstbedienungs-Datenstation in einem zweiten Ablaufdiagramm.

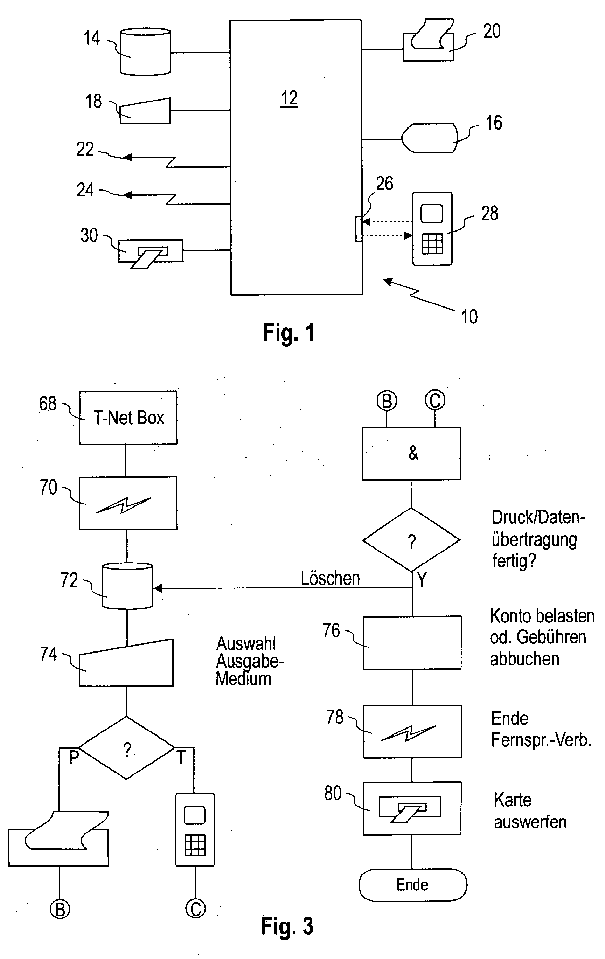

In Fig. 1 ist der Aufbau einer Selbstbedienungs-Datenstation 10 in einem Blockschaltbild dargestellt. Sie umfaßt einen Steuerrechner 12 mit einem Datenspeicher 14, ein Sichtgerät 16, ein Eingabemedium 18 für manuelle Eingaben, einen Drucker 20 und eine erste Verbindungseinrichtung 22 zu einem nicht dargestellten Netzwerk sowie eine zweite Verbindungseinrichtung 24 zu einem ebenfalls nicht dargestellten übergeordneten Rechner. Ferner ist an den Steuerrechner 12 eine Kartenlese- und Codiereinrichtung 30 an den Steuerrechner 12 angeschlossen. Das Eingabemedium 18 kann als Tastatur oder als berührungsempfindliche Eingabefläche auf dem Sichtgerät 16 als sog. Touchscreen augebildet sein. Ferner ist an eine Schnittstelle 26 für drahtlose Nahbereichs-Datenkommunikation angeschlossen, über welche Daten aus dem Datenspeicher 14 zu einem tragbaren Kommunikationsgerät 28 übertragen werden können. Die Schnittstelle 26 kann der optischen Datenverbindung (IRda) oder der Funkverbindung (Bluetooth) dienen. Als tragbare Kommunikationsgeräte kommen beispielsweise ein Funktelefon (Handy) oder auch ein tragbarer Computer (Laptop) in Betracht.

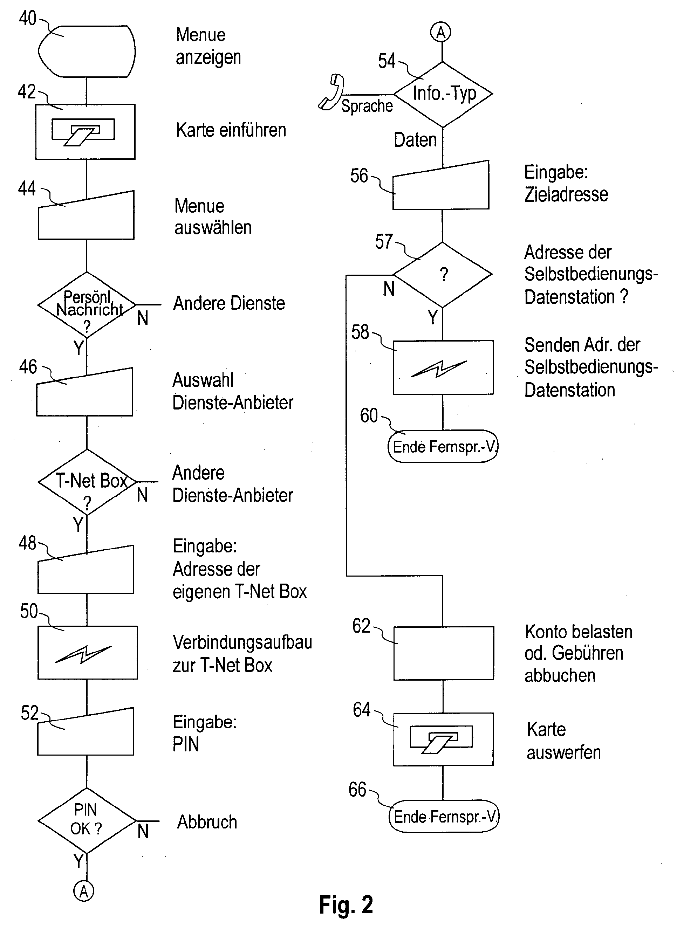

Fig. 2 zeigt in einem Ablaufdiagramm beispielhaft den Verbindungsaufbau von der Selbstbedienungs-Datenstation 10 zu einem persönlichen Informationsspeicher. Solche Informationsspeicher werden unter verschiedenen Bezeichnungen in unterschiedlichen Netzen angeboten. Das erfindungsgemäße Verfahren wird deshalb nur beispielhaft an Hand der bekannten T-Net-Box der Deutschen Telekom AG beschrieben, die Sprachnachrichten und Faxdokumente in einem persönlichen Informationsspeicher im Telefonnetz zwischenspeichert. Mit den Mailboxen anderer Netzanbieter läuft ein vergleichbares Verfahren ab. Ferner wird angenommen, daß es sich bei der Selbstbedienungs-Datenstation 10 um einen Kontoauszugdrukker handelt.

Mit 40 ist der Bereitschaftszustand der Selbstbedienungs-Datenstation 10 bezeichnet. Darin mögen die angebotenen Dienstleistungen als Menue auf dem Sichtgerät 16 angezeigt werden. Eine Person, die die Selbstbedienungs-Datenstation 10 benutzen möchte, führt zunächst ihre Checkkarte in die Kartenlese- und Codiereinrichtung 30 ein (Schritt 42). Nun kann in Schritt 44 eine Menueauswahl getroffen werden. Hat die Person den Menuepunkt "Abruf persönlicher Nachrichten" gewählt, so kann sie in Schritt 46 zwischen verschiedenen Diensteanbietern auswählen. War dies gemäß dem Beispiel die T-Net Box, so muß sie in dem nächstfolgenden Schritt 48 die Zugangsnummer ihres persönlichen Informationsspeichers eingeben. In Schritt 50 wird eine Verbindung zu ihrem persönlichen Informationsspeicher hergestellt. Die Person muß nun ihre geheime Zugangsnummer PIN eingeben (Schritt 52). War diese richtig, erfolgt eine Durchschaltung zum persönlichen Informationsspeicher. Liegt dort eine Sprachnachricht vor, so kann diese direkt abgehört werden (Schritt 54). Sind aber schriftliche Nachrichten oder Daten gespeichert, so muß eine Zieladresse angegeben werden, zu der diese Information gesendet werden soll (Schritt 56). Wurde als Ziel die Adresse der Selbstbedienungs-Datenstation 10 genannt, so sendet diese in Schritt 58 ihre Adresse zu der T-Net Box und beendet in Schritt 60 die Verbindung. Wurde in dem Verzweigungsschritt 57 eine andere Zieladresse erkannt, so wird diese ebenfalls gesendet und zur Kartenlese- und Codiereinrichtung 30 verzweigt, wo in Schritt 62 die Verbindungskosten von der Karte abgebucht werden. Anschließend wird die Karte ausgeworfen (Schritt 64) und die Verbindung beendet (Schritt 66). Wurde aber als Ziel die Adresse der Selbstbedienungs-Datenstation 10 genannt, bleibt die Karte in der Kartenlese- und Codiereinrichtung 30.

In dem vorgenannten Fall erfolgt der weitere Ablauf entsprechend dem in Fig. 3 dargestellten Diagramm: Nach kurzer Zeit ruft die T-Net Box die Selbstbedienungs-Datenstation 10 an (Schritt 68) und sendet die in dem persönichen Informationsspeicher abgelegte Information (Schritt 70), die entsprechend Schritt 72 in dem Datenspeicher 14 für die Dauer der Verbindung gespeichert wird. In Schritt 74 wählt die Person als Ausgabemedium den Drucker und/oder das Funktelefon 28 aus. Sind die Informationen zu dem bzw. den Ausgabemedien übertragen, wird zum einen der Datenspeicher 14 gelöscht. Zum anderen werden in Schritt 76 die Verbindungskosten von der Karte abgebucht. In Schritt 78 wird anschließend die Verbindung zur T-Net Box beendet und in Schritt 80 die Karte ausgeworfen.

Statt der Abbuchung der Kosten von einer Guthabenskarte oder der Belastung eines Konto ist es auch denkbar, die vorbeschriebene Dienstleistung gratis zur Verfügung zu stellen. Eine Finanzierung könnte beispielsweise durch Werbeaufdrucke erfolgen. In diesem Fall kann auf die Eingabe einer Karte verzichtet werden.

## Patentansprüche

1. Selbstbedienungs-Datenstation (10), umfassend einen Steuerrechner (12) mit einem Datenspeicher (14), ein Sichtgerät (16), ein Eingabemedium (18) für manuelle Eingaben, einen Drucker (20) und eine Verbindungseinrichtung zu einem Netzwerk,
**dadurch gekennzeichnet,**
**daß** sie zwischen einem ersten Betriebszustand, in dem sie mit einer übergeordneten Datenverarbeitungsanlage verbunden ist, und einem zweiten Betriebszustand umschaltbar ist, in dem sie Anrufe aus dem Netzwerk entgegenzunehmen und darin enthaltene Informationen auszudrucken und/oder in dem Datenspeicher (14) zu speichern vermag.

2. Selbstbedienungs-Datenstation (10) nach Anspruch 1, **dadurch gekennzeichnet, daß** sie sich in dem zweiten Betriebszustand nach manueller Eingabe einer Zieladresse eines an dem Netzwerk betriebenen persönlichen Informationsspeichers auf diesen aufzuschalten vermag.

3. Selbstbedienungs-Datenstation (10) nach Anspruch 1 oder 2, **dadurch gekennzeichnet, daß** an den Steuerrechner (12) eine Kartenlese- und Codiereinrichtung (30) für Chipkarten und/oder Magnetstreifenkarten angeschlossen ist, und daß die Selbstbedienungs-Datenstation (10) nur in dem zweiten Betriebszustand betreibbar ist, wenn zuvor eine Chip- oder Magnetstreifenkarte gelesen wurde.

4. Selbstbedienungs-Datenstation (10) nach einem der Ansprüche 1 bis 3, **dadurch gekennzeichnet, daß** an den Steuerrechner (12) eine Schnittstelle (26) für drahtlose Nahbereichs-Datenkommunikation angeschlossen ist, welche der Übertragung von Daten aus dem Datenspeicher (14) zu einem tragbaren Kommunikationsgerät (28) dient.

5. Verfahren zum Abrufen von für eine Person bestimmter Information aus einem an ein Netzwerk angeschlossenen persönlichen Informationsspeicher an einer Selbstbedienungs-Datenstation nach einem der Ansprüche 1 bis 4, mit den Schritten:
- Eingabe der Adresse eines persönlichen Informationsspeichers über das Eingabemedium (18) und Verbindungsaufbau zwischen der Selbstbedienungs-Datenstation (10) und dem persönlichen Informationsspeicher,
- Eingabe von Authentisierungsmerkmalen über das Eingabemedium (18),
- Senden der Netzwerk-Adresse der Selbstbedienungs-Datenstation (10) an den persönlichen Informationsspeicher,
- Beenden der Verbindung zu dem persönlichen Informationsspeicher,
- Verbindungsaufbau vom persönlichen Informationsspeicher zur Selbstbedienungs-Datenstation (10) unter Steuerung durch den persönlichen Informationsspeicher,
- Abruf von im persönlichen Informationsspeicher gespeicherter Information,
- Ausgabe der abgerufenen Information,
- Beenden der Verbindung zwischen dem persönlichen Informationsspeicher und der Selbstbedienungs-Datenstation (10).

6. Verfahren nach Anspruch 5, bei dem vor der Eingabe der Adresse eines persönlichen Informationsspeichers die Selbstbedienungs-Datenstation (10) in den für den Abruf bestimmten zweiten Betriebszustand gebracht wird.

7. Verfahren zum Abrufen von für eine Person bestimmter Information aus einem an ein Netzwerk angeschlossenen persönlichen Informationsspeicher an einer Selbstbedienungs-Datenstation (10) nach einem der Ansprüche 1 bis 4, unter Zuhilfenahme eines diskreten Fernsprechendgerätes (28), mit den Schritten:
- Eingabe der Adresse eines persönlichen Informationsspeichers über die Eingabeeinrichtung des Fernsprechendgerätes (28) und Verbindungsaufbau zwischen diesem und dem persönlichen Informationsspeicher,
- Eingabe von Authentisierungsmerkmalen über die Eingabeeinrichtung des Fernsprechendgerätes (28),
- Eingabe der Netzwerk-Adresse der Selbstbedienungs-Datenstation (10) über die Eingabeeinrichtung des Fernsprechendgerätes (28),
- Beenden der Verbindung zwischen dem Fernsprechendgerät (28) und dem persönlichen Informationsspeicher,
- Verbindungsaufbau vom persönlichen Informationsspeicher zur Selbstbedienungs-Datenstation (10) unter Steuerung durch den persönlichen Informationsspeicher,
- Abruf von im persönlichen Informationsspeicher gespeicherter Information,
- Ausgabe der abgerufenen Information,
- Beenden der Verbindung zwischen dem persönlichen Informationsspeicher und der Selbstbedienungs-Datenstation (10).

8. Verfahren nach einem der Ansprüche 5 bis 7, bei dem die Selbstbedienungs-Datenstation (10) zusätzlich eine Kartenlese- und Codiereinrichtung (30) für Chipkarten und/oder Magnetstreifenkarten umfaßt, wobei der Zugang zu der Selbstbedienungs-Datenstation (10) in Abhängigkeit von der auf der Chipkarte oder Magnetstreifenkarte gespeicherten Karteninformation freigegeben wird.

9. Verfahren nach einem der Ansprüche 5 bis 8, bei dem die Selbstbedienungs-Datenstation (10) zusätzlich eine Kartenlese- und Codiereinrichtung (30) für Chipkarten und/oder Magnetstreifenkarten umfaßt, wobei in der Chipkarte oder Magnetstreifenkarte eine Guthabensbetrag gespeichert ist, von dem die Kosten des Abrufs abgebucht werden, oder die Chipkarte oder Magnetstreifenkarte eine Scheck- oder Kreditkarte ist, mit deren Hilfe die Kosten des Abrufs einem Konto belastet werden.
